# EUROPEAN PATENT APPLICATION

(11) **EP 2 808 646 A1**
(43) Date of publication of application: **03.12.2014**
(21) Application number: 14164337.9
(22) Date of filing: 11.04.2014
(51) Int. Cl.: G01B 11/00, G06Q 10/00, G06Q 10/08

(54) **System for automated identification of producer and/or originator and type of recollected electrical appliances**

(30) Priority: 11.04.2013 CZ 20130279
(71) Applicant: Asekol s.r.o., 14300 Praha 4 (CZ)
(72) Inventor: Vrba, Jan, 25244 Psáry (CZ); Fiser, Martin, 29402 Kn most (CZ); Zykán, Pavel, 14100 Praha 4 (CZ); Sturm, David, 29471 Benátky nad Jizerou (CZ)
(74) Representative: Kratochvil, Vaclav

(57) **Abstract**

The invention comprises a conveyor (1.1), equipped with optical identification (1.4) and computer vision to match the unique identifiers of electrical or electronic equipment, including the manufacturer's logo and/or the identification plate on the electrical or electronic equipment and/or the bar code determining the type of equipment with the data in the database. The system involves two synchronized conveyor belts 2.7 installed in series, with free space between them. One conveyor belt (2.7) is equipped with an alignment section and a weight (2.11) for the fundamental identification of the collected electrical or electronic equipment and a LED curtain (2.10) is connected to the other conveyor belt (2.7) to determine the dimensions of the collected electrical or electronic equipment, along with at least one line camera (2.2) with lighting, mounted above the conveyor belt (2.7). In the free space under the conveyor belt (2.7) there is at least one other line camera (2.4) with lighting. At least the LED curtain (2.10) and the line cameras (2.2, 2.4) are connected to a computational device.

## Description

### Technical field

The technical solution concerns the field of waste management, specifically the treatment of returned electrical and electronic equipment and the method of determination of its originator.

### State of the art

National and European legislation forces operators who place electrical and electronic equipment on the market to ensure that the equipment is ecologically handled at the end of its life in the form of collection. For this purpose, collective systems to provide for the logistics of collection and the corresponding processing of used electrical and electronic equipment. Due to the payment of the costs of the entire system of collected electrical and electronic equipment, efforts are made to determine the share of individual originators in the flow of the collected equipment. This is currently addressed depending on the share of individual originators in the market for old electrical and electronic equipment manufactured prior to 13th August 2005 or depending on the quantities of electrical and electronic equipment put on the market for new electrical and electronic equipment manufactured after 13th August 2005. This method has, however, several disadvantages; the most prominent ones include inaccuracy and inability to use the identification of a specific piece of collected electrical and electronic equipment to control further processing steps.

### Summary of Invention

The deficiencies mentioned above are, to a large extent, eliminated by a device for identifying collected electrical and electronic equipment based on this invention.

The described system is based on optical identification and matching of unique identifiers of the electrical and electronic equipment by means of computer vision. The following key recognition features are used: logo of the manufacturer, identification plate of the equipment, or the text in it, such as the type or model number, the bar code indicating the type of device.

The data read are compared against the data in the database. If the database does not contain the device, it is added, subject to verification by the operator.

To match the manufacturer's logo through computer vision, the following sequence of steps is taken: image acquisition by the camera, localization of fields which could potentially contain the logo, elimination of candidate areas and final classification based on the model stored in the database.

To read the information from the identification plate of the electrical or electronic equipment via computer vision, the following sequence of steps is taken: image acquisition by the camera, pre-processing to adjust image contrast, feature segmentation, formation of continuous blocks of text, machine-reading of the text, search for known text strings with the admission of non-zero error occurrence, final identification of the model based on the model in the database.

The successful match of a single key recognition feature is enough for the successful identification of the originator and/or manufacturer of collected electrical and electronic equipment.

Key recognition features may be supported by additional features, such as weight, dimensions or 3D model of the electrical or electronic equipment. In that case it is for example possible to determine the completeness of collected electrical and electronic equipment or the processed weight of the collected equipment.

When introducing a new type of electrical or electronic equipment, the system operator loads information into the database: type of the equipment - TV, computer monitor, DVD player, etc., and the technology used for display units, i.e. CRT, LCD, LED, plasma, etc. It is therefore possible to control subsequent processing steps in case of any other occurrence of the equipment.

### Brief description of drawings

The invention will be described in greater detail on a specific embodiment with the help of the attached drawings. Figure 1 contains an overview diagram of the system. Figure 2 shows an example of system implementation as a preliminary stage of a workplace for the disassembly of collected devices with a screen. Figure 3 demonstrates a logic diagram of the hardware used in the implementation example.

### Description of Embodiments

An embodiment involves implementation of the solution as a preliminary stage of a line for the disassembly of collected electrical and electronic equipment with a screen, i.e. TVs and computer monitors. The key for the determination of the manufacturer and/or originator of electrical equipment with a screen is the manufacturer's logo, which is typically located on the front of the device, and the label or bar code, which is typically located at the rear of electrical or electronic equipment with a screen. Collected equipment will be therefore scanned from these two sides.

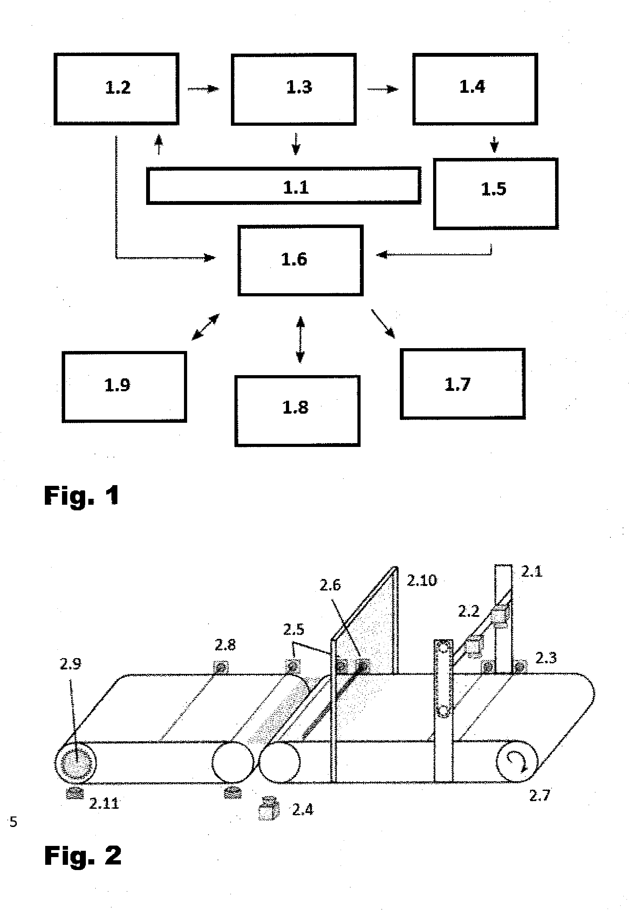

Figure 1 shows an overview diagram and its key components: conveyor **1.1,** sensors **1.2** mounted on the conveyor **1.1,** unit **1.3** to control the conveyor **1.1,** camera subsystem **1.4** involving a set of line cameras **2.2, 2.4** for scanning the object from the required sides, subsystem **1.5** to recognize characters in the scanned image, information system **1.6** to identify the originator of collected electrical and electronic equipment, module **1.7** to generate reports and statistics, database **1.8** of electrical and electronic equipment containing the compared characteristics of individual pieces and software for database management **1.8,** graphical user interface **1.9** of the system operator. Blocks **1.1** to **1.4** are hardware components of the system and blocks **1.5** to **1.9** are software components, or blocks **1.6** to **1.9** are part of the complex information subsystem **1.5.**

Figure 2 shows an example of system implementation as a preliminary stage of a workplace for the disassembly of collected devices with a screen. The design involves two synchronized conveyor belts **2.7** installed in series, with free space between them. The first conveyor belt **2.7** is equipped with an alignment section and weight **2.11** to ensure fundamental identification of the collected electrical and electronic equipment. Optical gate **2.8** as a proximity sensor transmits an impulse and reads off the weight of the weighed object while the conveyor is moving. The second conveyor belt **2.7** is attached to a LED curtain **2.10** and a laser proximity sensor **2.6** to determine the dimensions of the collected electrical or electronic equipment. Two line cameras **2.2** with lighting are mounted above the conveyor belt **2.7** and the free space below the conveyor belts **2.7** accommodates another line camera **2.4** with lighting. The area scanned by cameras **2.2, 2.4** is monitored by pairs of optical gates **2.3** and **2.5.** The presence of the object detected by them serves to activate and deactivate the scanning operation of the cameras **2.2, 2.4.** The conveyor is driven by electric motors with speed control via a frequency inverter. The speed of the conveyor is detected using a quadrature encoder **2.9.** The described components are connected to a computing device that controls their activity. Two line cameras **2.2** with lighting are placed on the vertical travel **2.1** to ensure that they move to such a distance that the scanned collected electrical and electronic equipment under them is in focus. The gap between the synchronized conveyor belts **2.7** is covered with glass.

The solution concerns two synchronized conveyor belts **2.7** installed in series, with free space between them. Through the gap the underside of the equipment is scanned by the line camera **2.4** or by cameras depending on the width of the belt **2.7** and the required resolution, positioned below the plane of motion. The line camera **2.4** is complemented with additional LED illuminators.

On the second conveyor belt **2.7** above the plane of motion there is a camera system designed to scan the rear part of the equipment. The camera system consists of multiple line cameras **2.2** based on the width of the belt **2.7** and the required resolution, the respective lenses and illuminators. The whole system is placed on a vertical travel that moves the cameras to such a distance to ensure that the object scanned is properly in focus. The correct scanning height will be obtained from the acquired profile of the object.

In front of the vertical travel **2.1** with line cameras **2.2** in the direction of movement of the electrical or electronic equipment there is a LED curtain **2.10** to measure the height profile of the equipment. This recorded profile then copies the vertical travel **2.1** to ensure that the line cameras **2.2** placed on it have the scanned object in their "depth of field", i.e. that the scanned image is sufficiently sharp. The equipment to be identified arrives at the first conveyor belt **2.7,** aligned along the board. The device is complemented with two additional sensors for the complementary measurement of other properties, such as weight **2.11,** which is part of the conveyor belt **2.7,** laser sensor **2.6** distance as part of the second conveyor belt **2.7,** and all this will, jointly with data from the LED curtain **2.10,** make it possible to determine X, Y, Z dimensions of the electrical or electronic equipment, and with the optical gates **2.3, 2.5** and **2.8,** which enable and disable the line cameras **2.2, 2.4** and the weight **2.11** as the object passes.

The operation of the entire system is controlled and synchronized by a control unit, which scans data from all sensors, controls the conveyor motors through inverters and the vertical travel and makes sure that the cameras as clocked to the speed of the conveyor belts. The data from the cameras are transferred to a primary server, which then sends the created images to another server for evaluation. The other server contains a database of electrical and electronic equipment. The former server hosts a software application that allows the operator's access, i.e. in particular to control line parameters and monitor them, display the results of identification of the electrical or electronic equipment and statistics, with the possibility of adding and modifying the database of equipment and manually enter the identification of a specific unit of equipment in case of a failed or faulty identification.

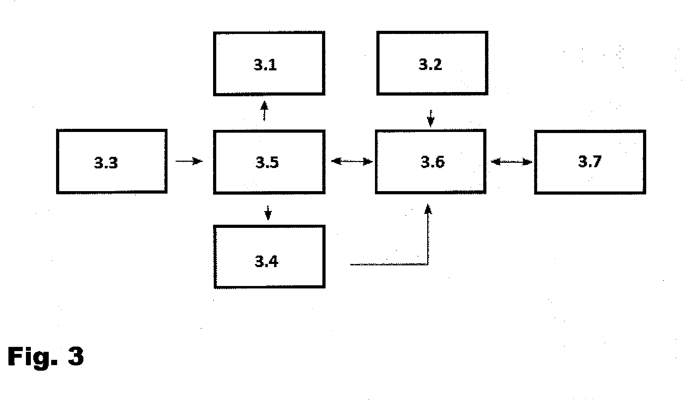

Figure 3 demonstrates the logic scheme of the hardware on an embodiment of implementation in which the conveyor belt **3.1** of the scanning tunnel, the weighing subsystem **3.2,** i.e. part of the conveyor belt **2.7** equipped with a weight; optical system **3.3** with optical gates to detect the presence of an object at a specific point in the tunnel, camera system **3.4** with lighting, mounted on the vertical travel, control unit **3.5** allowing to control the belt with fundamental processing logic for the signal from the sensors, especially optical gates), primary computational server **3.6** to process the data from the camera system **3.4** and provide information on the condition of the local part of the system, secondary server **3.7** to provide additional computational power for time-consuming operations.

### Industrial Applicability

A system for automated identification of the manufacturer and/or originator of collected electrical and electronic equipment can be used in particular in the sorting and processing of collected electrical and electronic equipment for the purposes of automated reporting of the manufacturer and/or originator of the collected equipment, reporting of the total weight of collected electrical and electronic equipment and weights from different manufacturers and/or originators, determination of completeness of the collected equipment on the basis of comparison of the actual weight and the reference weight and on the basis of comparison of dimensions and determination of the particular type of equipment, i.e. identification of its technology, which can be used for automated decisions about how to process it subsequently.

## Claims

1. A system for automated identification of the manufacturer and/or originator and type of collected electrical and electronic equipment, ***characterized in that*** it consists of a conveyor (1.1) provided with optical identification (1.4) containing at least one line camera (2.2) connected to a computational device via computer vision, incorporating at least image processing equipment, equipment for the formation of continuous blocks of texts and equipment for machine reading of text, to match the unique identifiers of the electrical and electronic equipment with the data in the database.

2. The system as in Claim 1, ***wherein*** the unique identifiers consist of the manufacturer's logo and/or identification plate on the electrical or electronic equipment and/or barcode determining the type of equipment.

3. The system as in Claim 1 or 2, ***wherein*** the system consists of two synchronized conveyor belts (2.7) installed in series, with free space between them, with one conveyor belt (2.7) being provided with an alignment section and a weight (2.11) for the fundamental identification of the collected electrical and electronic equipment and a LED curtain (2.10) attached to the other conveyor belt (2.7) in order to determine the dimensions of the collected electrical and electronic equipment, and at least one line camera (2.2) with lighting installed above the conveyor belt (2.7), and at least another one line camera (2.4) with lighting mounted in the free space under the conveyor belts (2.7), and at least the LED curtain (2.10) and the line cameras (2.2, 2.4) being connected to the computational device.

4. The system as in Claim 3, ***wherein*** the conveyor belts (2.7) are provided with at least two optical gates (2.3, 2.5, 2.8).

5. The system as in Claim 3 or 4, ***wherein*** at least one line camera (2.2) with lighting is positioned on a vertical travel (2.1) to ensure its movement to such a distance at which the scanned collected electrical or electronic equipment underneath is properly in focus.

6. The system as in any of the preceding Claims 3 to 5 ***wherein*** the gap between the synchronized conveyor belts (2.7) is covered with glass.
